# EUROPÄISCHE PATENTANMELDUNG

(11) **EP 0 671 290 A1**
(43) Veröffentlichungstag der Anmeldung: **13.09.1995**
(21) Anmeldenummer: 95101205.3
(22) Anmeldetag: 30.01.1995
(51) Int. Cl.: B60D 1/155, B60D 1/44

(54) **Automatische Verstelldeichsel für Lastwagenanhänger**

(30) Priorität: 10.03.1994 CH 2300/92
(71) Anmelder: DAVID WIEDERKEHR AG, Fahrzeugbau, Industrie Brühl, CH-4800 Zofingen (CH)
(72) Erfinder: Wiederkehr-Tschopp, David, CH-4800 Zofingen (CH)
(74) Vertreter: OK pat AG

(57) **Zusammenfassung**

Verstellbare Deichsel für Lastwagenanhänger bestehend aus einem an der üblichen dreieckigen Stützkonstruktion (1) der Anhängevorrichtung befestigten Führungsrohr (8) und einem darin in Längsrichtung gleitenden Deichselrohr (3) mit Anhängeöse (2). Das Führungsrohr besitzt eine elektropneumatische Bremsvorrichtung die das Deichselrohr in einer beliebig wünschbaren Stellung fixiert, und vom Fahrerhaus aus über ein Magnetventil betätigt werden kann. Der Abstand zwischen Zugwagen und Anhänger kann damit auch während der Fahrt beliebig verändert werden. Durch ein zweites Magnetventil können die Achsen des Anhängers für Manövrierzwecke separat gebremst werden.

## Beschreibung

Anhänger für Lastwagen sind zur Verbindung mit dem Zugfahrzeug vorne mit einer Anhängevorrichtung ausgerüstet, die an einem Haken oder einer Zugöse des Lastwagens befestigt wird. Der Anhänger wird dabei mit dem Zugfahrzeug schwenkbar verbunden, derart, dass die Zugskomposition nicht nur geradeaus fahren, sondern auch um beliebige Kurven gesteuert werden kann. Die übliche Anhängevorrichtung ist von dreieckiger Form und besteht aus zwei seitlichen Streben, die mit dem Anhänger starr verbunden und in Fahrtrichtung zur Mitte zusammengeführt sind. Vorne ist die Vorrichtung mit einem Ring versehen, der in den Haken des Lastwagens eingehängt oder in die Zugöse eingeschoben und mit der letzteren durch einen Bolzen verbunden wird. Die Länge der Anhängevorrichtung wird dabei so bemessen, dass der Lastzug fähig ist, alle vorkommenden Kurven zu umfahren, ohne dass die Ecken des Zugwagens einerseits und des Anhängers anderseits sich berühren oder gegeneinander pressen und dadurch beschädigt werden können. Dies bedingt eine Länge der Anhängevorrichtung, die, je nach der Breite der Fahrzeuge, einen grossen Abstand zwischen Lastwagen und Anhänger zur Folge hat.

Nun bedingt aber ein solch grosser Abstand, je nach der Form von Anhänger und Zugfahrzeug eine oft beträchtliche Erhöhung des Luftwiderstands, insbesondere bei schneller Geradeausfahrt, d.h. beim überwiegenden Anteil der ganzen Fahrstrecke. Da der grosse Abstand zwischen Lastwagen und Anhänger nur beim Befahren verhältnismässig enger Kurven benötigt wird, ist es deshalb sinnvoll, gemäss der vorliegenden Erfindung die Anhängevorrichtung mit einer Deichsel zu versehen, deren Länge verstellbar ist, dies insbesondere auch, ohne dass für den Verstellvorgang die Fahrt unterbrochen werden muss. Ein weiterer Grund für die Verwendung einer Deichsel von verstellbarer Länge ist durch die Vorschriften des Strassenverkehrsgesetzes bedingt. Diese setzen für die Gesamtlänge von Lastzügen einen maximalen Wert fest, der z.B. in der Schweiz 18 m beträgt. Durch Verwendung einer längenverstellbaren Deichsel kann damit der Laderaum von Anhänger und Zugwagen besser ausgenützt werden; eine Verlängerung des Lastzugs über die gesetzliche Grenze hinaus ist dann nur noch in besonderen Fällen vorübergehend, beim Manövrieren des Lastzugs oder beim Befahren enger Kurven, notwendig, während bei normaler Fahrt die gesetzlich vorgeschriebene Länge nicht überschritten wird.

Die verstellbare Deichsel gemäss der vorliegenden Erfindung besteht aus einem zylindrischen Deichselrohr welches innerhalb eines mit dem Anhänger starr verbundenen Führungsrohrs in Längsrichtung verschiebbar ist. Durch eine seitlich am Führungsrohr angebrachte, vom Fahrerhaus des Zugfahrzeugs zu bedienende Bremsvorrichtung kann das Deichselrohr in einer zwischen zwei Endanschlägen beliebig wählbaren Stellung festgehalten werden. Zur Dämpfung von Schlägen werden die Endanschläge vorteilhaft mit je einer Manschette aus Kunststoff ausgestattet. Das Führungsrohr ist mit dem Anhänger durch eine für Anhängevorrichtungen übliche dreieckige Stützkonstruktion starr verbunden.

Die Bremsvorrichtung, die seitlich am Führungsrohr angebracht ist und durch eine Oeffnung am Führungsrohr mit dem Deichselrohr in Kontakt tritt, besteht aus einem losen Bremsklotz aus Metall, der durch einen drehbaren Exzenter gegen das Deichselrohr gepresst werden kann. Der Bremsklotz ist in der seitlichen Oeffnung des Führungsrohrs lose eingesetzt. Gegen eine Verschiebung in Längsrichtung ist er durch die vorn und hinten begrenzte Oeffnung des Führungsrohrs geschützt. Der drehbare Exzenter ist mit einem Hebel fest verbunden, der an seinem andern Ende an der Kolbenstange des Federspeichers befestigt ist. In Ruhestellung des Federspeichers zieht die Spiralfeder die Kolbenstange nach hinten, und der Exzenter presst den Bremsklotz gegen das Deichselrohr, welches dadurch in seiner Stellung fixiert ist. Wird die Feder mittels Luftdruck zusammengedrückt, bewegt sich die Kolbenstange nach vorn und dreht damit den mit der Querstange verbundenen Exzenter. Dadurch wird der Bremsklotz frei und das Deichselrohr innerhalb des Führungsrohrs in Längsrichtung frei verschiebbar.

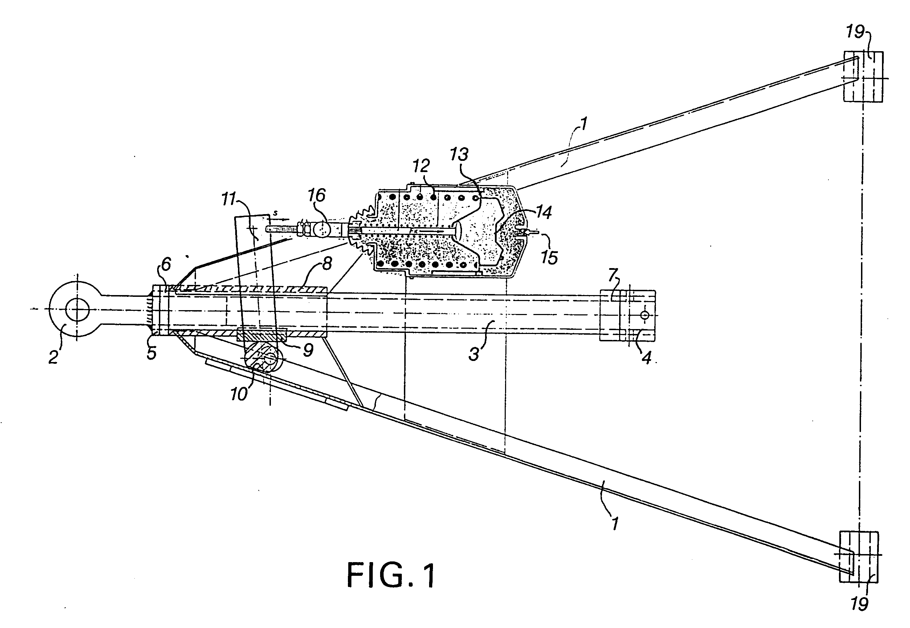

Der Aufbau und das Funktionieren der verstellbaren Deichsel wird durch die nachfolgenden Figuren 1 bis 3 erläutert, wobei die möglichen Ausführungsformen durch die dargestellten Zeichnungen keineswegs beschränkt sein sollen.
Figur 1 zeigt die verstellbare Deichsel in einer Gesamtansicht. Die beiden seitlichen Streben (1) sind an ihren Enden (19) mit dem Anhänger fest verbunden. Am vordern Ende, wo die beiden Streben (1) miteinander verbunden sind, befindet sich das Führungsrohr (8), in welchem das Deichselrohr(3) in Längsrichtung frei verschiebbar ist. An seinem vordersten Ende trägt das Deichselrohr einen Ring (2), welcher in die Zugöse des Lastwagens eingeschoben und dort mittels eines Bolzens befestigt wird. Das Deichselrohr ist mit einem vordern (5) und einem hintern (4) Anschlagring versehen, welche die Längsbewegung innerhalb des Führungsrohrs begrenzen. Zur Dämpfung des Anschlags befinden sich innerhalb der Endanschläge die beiden Dämpfungsringe (6,7) aus schlagfestem Kunststoff.
   Die Bremsvorrichtung für das Deichselrohr, durch welche dieses in einer beliebigen Position festgehalten wird, besteht aus dem Bremsklotz (9), welcher lose in eine seitliche Oeffnung des Führungsrohrs (8) eingesetzt ist, und dem Exzenter (10), welcher mit dem Hebel (11) verbunden ist. Der Federspeicher (14) enthält einen durch Druckluft verschiebbaren Kolben (13) welcher beim Einströmen von Druckluft durch den Stutzen (15) die Spiralfeder (12) zusammendrückt und damit die Kolbenstange (16) nach vorne schiebt. Dabei wird über den Hebel (11) der Exzenter im Gegenuhrzeigersinn gedreht, wodurch der Bremsklotz (9) frei, und damit das Deichselrohr frei beweglich wird. Im Ruhezustand, d.h. ohne Druckluft, wird die Kolbenstange (16) durch die Kraft der Feder nach hinten gezogen; der Exzenter drückt damit gegen den Bremsklotz und fixiert das Deichselrohr innerhalb des Führungsrohrs. Die Druckluft zur Betätigung wird dem Luftdruckbremssystem des Lastwagens entnommen und durch ein erstes Magnetventil vom Fahrerhaus ferngesteuert freigegeben. Dieses erste Magnetventil ist so konstruiert, dass es beim Abschalten die Druckluft ins Freie entlässt, wodurch die Deichselbremse wieder in Funktion tritt.

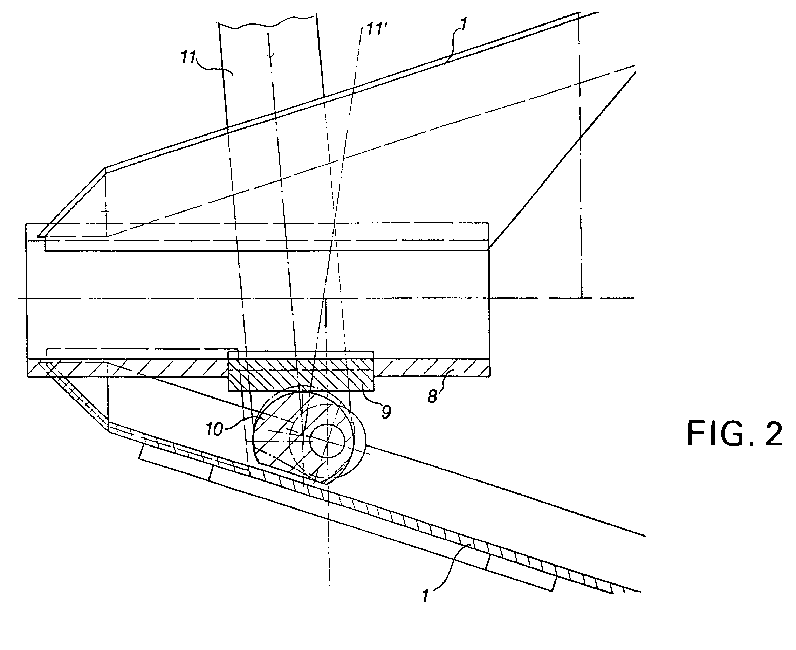

Figur 2 zeigt die Bremsvorrichtung vergrössert im Detail. Mit dem Hebel (11) in seiner linken Endstellung gibt der Exzenter (10) den in einer Oeffnung des Führungsrohrs (8) lose eingesetzten Bremsklotz (9) frei und macht dadurch das Deichselrohr frei. Befindet sich der Hebel dagegen in seiner rechten Endstellung (11'), so drückt der Exzenter (10) gegen den Bremsklotz (9), und das Deichselrohr ist in seiner momentanen Stellung festgeklemmt.

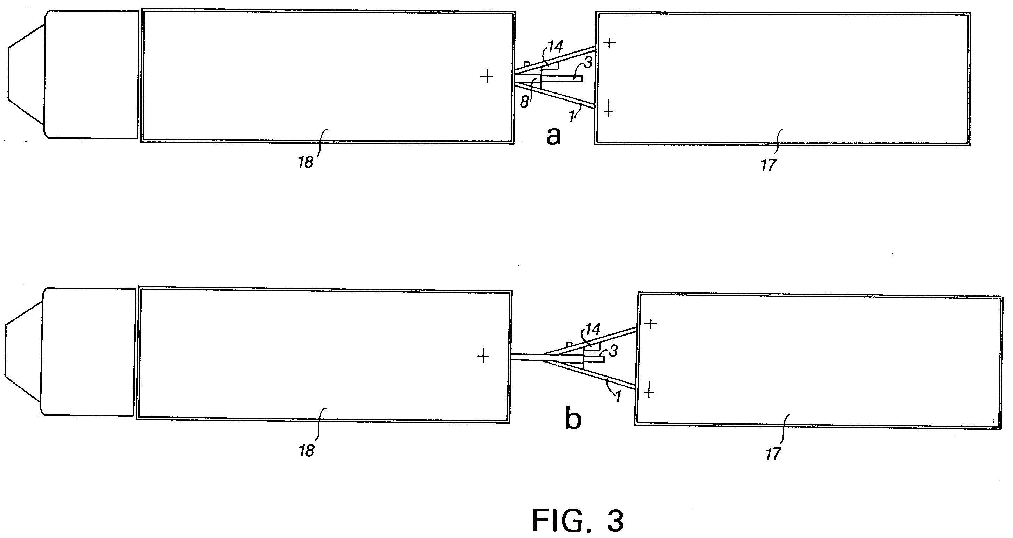

Figur 3 zeigt einen Lastzug von oben gesehen, in Stellung a) mit der Deichsel in ihrer kürzesten Stellung, und in Stellung b) mit der Deichsel in ihrer maximal ausgezogenen Länge, d.h. mit dem grössten Abstand zwischen Anhänger (17) und Zugwagen (18). Die übrigen Bezugszahlen bezeichnen die gleichen Teile wie in den Figuren 1 und 2.
   Für die Verstellung der Deichsel sind die folgenden Arbeitsgänge zu vollziehen:
   a) Im Stillstand: Der Anhänger wird gebremst, sodann das Deichselrohr durch Betätigung des ersten Magnetventils gelöst und der Zugwagen zur Verlängerung der Deichsel um eine kleine Strecke vorwärts, bezw. zur Verkürzung rückwärts gefahren.
   b) Während der Fahrt:
      Auf ebener Strecke: Das Deichselrohr wird durch Betätigung des ersten Magnetventils gelöst; zur Verlängerung der Deichsel wird der Zugwagen etwas beschleunigt, bezw. zur Verkürzung durch Wegnehmen von Gas leicht verlangsamt.

   Bergab: Zur Verlängerung der Deichsel wird durch Betätigung des zweiten Magnetventils der Anhänger, zur Verkürzung der Deichsel dagegen der Zugwagen leicht gebremst.
   Bergauf: Zur Verlängerung der Deichsel muss lediglich das erste Magnetventil betätigt werden; zur Verkürzung wird wie auf ebener Strecke der Zugwagen etwas gebremst. Bei starker Steigung muss eine Verkürzung der Deichsel bei gebremstem Anhänger aus dem Stillstand durch Rückwärtsfahren des Zugwagens erfolgen.

## Patentansprüche

1. Verstellbare Deichsel für Lastwagenanhänger, bestehend aus einem zylindrischen Deichselrohr (3), welches innerhalb eines mit dem Anhänger durch eine Stützkonstruktion (1) starr verbundenen Führungsrohrs (8) in Längsrichtung verschiebbar und in gewünschter Stellung fixierbar ist, dadurch gekennzeichnet, dass das Deichselrohr durch eine seitlich am Führungsrohr wirkende Bremsvorrichtung (9,10) mittels pneumatisch ausgelöster Federkraft in beliebiger Längsstellung festgehalten werden kann, wobei die Bremsvorrichtung mittels einer vom Fahrer des Zugwagens über mindestens ein Magnetventil betätigten elektropneumatischen Steuerung, auch während der Fahrt, nach Belieben angezogen oder gelöst, und die Deichsel damit in ihrer Länge verstellt werden kann.

2. Verstellbare Deichsel gemäss Anspruch 1, dadurch gekennzeichnet, dass die Bremsvorrichtung aus einem mit einem Hebel (11) starr verbundenen drehbaren Exzenter (10) besteht, welcher auf einen gegen das Deichselrohr wirkenden Bremsklotz (9) drückt und dieses damit durch Reibungskraft in seiner Stellung fixiert, wobei der Bremsklotz in einer seitlichen Oeffnung des Führungsrohrs lose eingesetzt und in seiner Längsbewegung durch die vordere und hintere Begrenzung der Oeffnung eingeschränkt ist, und wobei der Exzenter in Ruhestellung durch die ziehende Kraft einer in einem pneumatisch betätigten Federspeicher (14) befindlichen, über den Hebel auf die Exzenterachse wirkenden Spiralfeder (12) gegen den Bremsklotz drückt und dadurch das Deichselrohr in seiner Stellung fixiert.

3. Verstellbare Deichsel gemäss den Ansprüchen 1 und 2, dadurch gekennzeichnet, dass der Federspeicher (14) aus einem zylindrischen Rohr besteht, welches eine Spiralfeder (12) und einen auf diese wirkenden, in Längsrichtung verschiebbaren Kolben (13) enthält, wobei mittels der elektropneumatischen Steuervorrichtung der Federspeicher über den Stutzen (15) mit Druckluft beaufschlagt wird, welche den Kolben nach vorn schiebt und dadurch die Feder zusammendrückt, wobei über die Kolbenstange (16) der Hebel (11) nach vorn geschoben, und der Exzenter (10) derart gedreht wird, dass der Bremsklotz (9) gelockert und das Deichselrohr (3) im Führungsrohr (8) frei verschiebbar wird.

4. Verstellbare Deichsel gemäss den Ansprüchen 1 bis 3, dadurch gekennzeichnet, dass die elektropneumatische Steuerung für die Bremsvorrichtung ein erstes vom Fahrerhaus aus zu bedienendes Magnetventil umfasst, welches beim Einschalten die notwendige Druckluft für die Betätigung des Federspeichers aus dem Druckluftvorrat des Radbremssystems über den Stutzen (15) dem Federspeicher zuleitet und beim Abschalten wieder ins Freie entweichen lässt, wodurch das Deichselrohr (3) gelöst und nach Belieben in einer neuen Stellung fixiert werden kann.

5. Verstellbare Deichsel gemäss den Ansprüchen 1 bis 4, dadurch gekennzeichnet, dass die elektropneumatische Steuerung ein zweites, vom Fahrer mittels Handschalter zu betätigendes Magnetventil umfasst, mittels welchem für Manövrierzwecke die Radbremse des Anhängers eingeschaltet werden kann.

6. Verstellbare Deichsel gemäss den Ansprüchen 1 bis 5, dadurch gekennzeichnet, dass das Deichselrohr (3) an seinen beiden Enden mit je einer Anschlagvorrichtung (4,5,6,7) versehen ist, welche gegen die entsprechenden Enden des Führungsrohrs (8) wirkt und dadurch die Endstellung des Deichselrohrs in beiden Verschiebungsrichtungen begrenzt.

7. Verstellbare Deichsel gemäss Anspruch 6, dadurch gekennzeichnet, dass die Anschlagsvorrichtung an den beiden Enden des Deichselrohrs (3) je aus einem festen, mit dem Deichselrohr starr verbundenen Metallring (4,5) und einer das Deichselrohr auf der Innenseite des Rings umfassenden Kunststoffmanschette (6,7) besteht, welche harte Stösse dämpft, die beim Erreichen der beidseitigen Endstellung des Deichselrohrs auftreten können.
